# EUROPEAN PATENT APPLICATION

(11) **EP 1 860 568 A1**
(43) Date of publication of application: **28.11.2007**
(21) Application number: 06714717.3
(22) Date of filing: 27.02.2006
(51) Int. Cl.: G06F 12/00

(54) **BUS CONTROLLER**

(30) Priority: 14.03.2005 JP 2005072013
(71) Applicant: MATSUSHITA ELECTRIC INDUSTRIAL CO., LTD., Osaka 571-8501 (JP)
(72) Inventor: KURATA, Kazushi c/o Matsushita Electric Ind. Co. Ltd., Chuo-ku, Osaka-shi, Osaka 540-6207 (JP); HIGAKI, Nobuo c/o Matsushita Electric Ind. Co. Ltd., Chuo-ku, Osaka-shi, Osaka 540-6207 (JP)
(74) Representative: Pautex Schneider, Nicole Véronique
(86) International application number: PCT/JP2006/303580
(87) International publication number: WO 2006/098135

(57) **Abstract**

A bus controller capable of shortening the time required before a flush is completed so as not to degrade the performance of a processor. A bus controller (100) includes: a FIFO (111) for temporarily holding, on a first-in first-out basis, data to be stored from a processor into a memory; a flush pointer (112) for holding a pointer which indicates end data held by the FIFO (111) at a time when a trigger signal is received; a memory control unit (113) for writing a portion of the data held by the FIFO (111) into the memory according to the trigger signal so as to partially flush the FIFO (111), the portion ranging from start data through end data indicated by the flush pointer (112); and a wait circuit (102) for generating a wait signal for a specific access instruction, which is executed by the processor, until the memory control unit (113) completes the partial flush.

## Description

### Technical Field

The present invention relates to a bus controller which has a buffer between a processor and a memory.

### Background Art

There is a configuration available such that a buffer is provided to hide access latency between a processor and a slave device. In the buffer, data to be stored from the processor into the slave device is temporarily stored. Transferring the data from the buffer to the slave device is performed independently without being controlled by the processor.

In order that the processor checks to be sure that the data stored in the buffer has been written into the slave device, one method is that the processor reads the slave device. Specifically, the processor executes a specific read instruction so that the buffer collectively flushes the data held within. In this case, the term "flush" means that all the data stored in the buffer is written into the slave device.

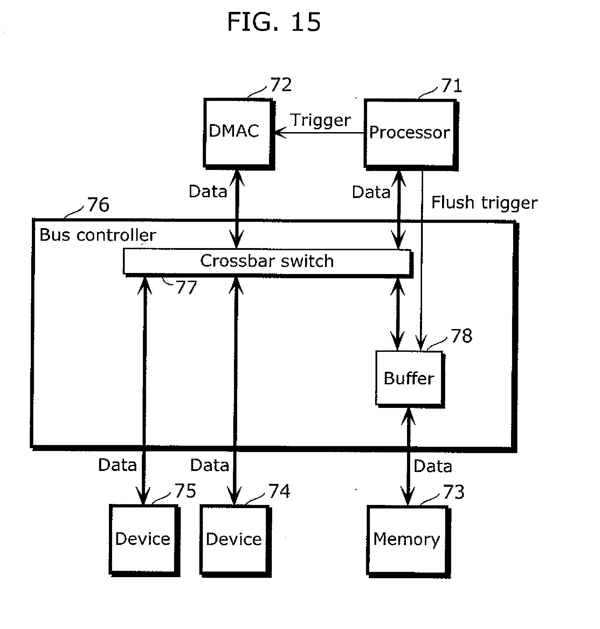

FIG. 15 shows a configuration of a conventional bus controller that has a buffer between a processor and slave devices. A bus controller 76 includes a crossbar switch 77 and a buffer 78. The bus controller 76 gives bus control between master devices (a processor 71 and a DMAC 72) and slave devices (a memory 73, a device 74, and a device 75). The bus controller 76 also controls buffering of data to be stored into the device 73.

In FIG. 15, the master devices, or equivalently, the processor 71 and the DMAC 72 have three slave devices. There is provided the crossbar switch 77 to give the master and slave devices a bus connection. The connection is controlled by the bus controller 76. The data to be stored in the memory 73 by the processor 71 is temporarily buffered in the buffer 78. A flush trigger signal for the above-mentioned flush is generated by a load instruction. The processor checks to be sure that coherency is insured within the data in the memory 73 based on whether or not the load instruction has been completed, and then asserts a trigger signal for starting DMA to a DMAC.

Program 1 is given as an example.

### <Program 1>

line 1: mov r0,0x0
line 2: mov a0,0x0
line 3: st @a0,r0
line 4: ld r15,@a0

In line 3, the processor 71 stores data in the device 73. The data is temporarily held by the buffer 78. In line 4, the processor loads the data from the device 73. This causes the buffer 78 to start flushing. An interlock condition prevails in the processor 71 until the flush is completed. After the flush completion, a response is received to the load instruction. This causes the processor 71 to check to be sure that the writing of line 3 has been completed. In other words, coherency is insured.

In order to insure coherency in a conventional method, a high-speed register is provided for a bus so that data reading becomes faster (for example, see Patent Reference 1). There is another conventional method in which the data reading is performed by two instructions so that a processor executes the instructions during the period between the first and the second instructions (for example, see Patent Reference 2).
Patent Reference 1: Japanese Patent No. 2917659
Patent Reference 2: Japanese Patent Application Publication No. 04-123241

### Disclosure of Invention

### Problems that Invention is to Solve

However, the above conventional method is disadvantageous in that a long time is required for flushing although a flush completion check becomes faster. Performance of a processor becomes degraded according to both the time required for flushing and read latency caused by the flush completion check.

The time required for flushing, which is dependent on a buffer capacity, is equal to the time required for storing data of an amount corresponding to the buffer capacity at the longest.

Specifically, in order to insure coherency, by having the processor not execute a subsequent store instruction while collectively flushing data in the buffer by a read instruction, the amount of data to be flushed decreases but the subsequent store instruction is kept waiting for its execution. In the case where the subsequent store instruction is executed, as data including the data corresponding to the executed store instruction is flushed, the time required for flushing becomes longer. In other words, in the case where a quick check is required to be sure that the data has been written into a slave device, it becomes impossible to execute the store instruction. For example, when a DMA transfer targeted for the slave device as a source is started after checking to be sure that writing has been completed, it is preferable that the time required for flushing be shorter.

It is an object of the present invention to provide a bus controller capable of shortening the time required after a trigger signal is received until a flush has completed so as not to degrade the performance of a processor.

### Means to Solve the Problems

A bus controller of the present invention controls a bus between a processor and a memory. The bus controller includes: a buffer unit which temporarily holds data to be stored from the processor into the memory, on a first-in first-out basis; a reception unit which receives a trigger signal that causes the buffer unit to be partially flushed; a pointer holding unit which holds a pointer that indicates end data held by the buffer unit at a time when the trigger signal is received; a writing unit which writes, in accordance with the trigger signal, a portion of the data held by the buffer unit into the memory so as to partially flush the buffer unit, the portion ranging from start data through data which is indicated by the pointer among the data held by the buffer unit; and a wait generating unit which generates a wait signal for a specific access instruction to be executed by the processor, until the writing unit completes the partial flush.

According to this configuration, data to be flushed (data held until a time when the trigger signal is received) is partially flushed instead of flushing all the data so as to cause the buffer unit to be empty. Therefore, the time ranging from the time when the trigger signal is received through the time when a flush is completed, is shortened so as not to degrade the performance of the processor.

Furthermore, it becomes possible to hold the data to be stored in the buffer area later than the data indicated by the pointer. The processor, therefore, executes a subsequent store instruction before a partial flush has been completed, thereby bringing efficiency to the processor.

Here, the reception unit may receive the trigger signal, the trigger signal being outputted from the processor when an instruction other than an instruction to access the memory is executed.

According to this configuration, the instruction other than the instruction to access the memory, such as an instruction to access another device or a special instruction to generate a trigger signal, allows the trigger signal to be outputted with a shorter latency.

Here, the reception unit may receive the trigger signal, the trigger signal being outputted from the processor when the processor executes a store instruction having the partial flush.

According to this configuration, the trigger signal is issued at the same time as the store instruction so that coherency is insured within the data of the store instruction.

Here, the specific access instruction may be an instruction to access a device which is different from the memory.

According to this configuration, the device different from the memory such as a device having a shorter latency than the memory or a special device, allows the processor to check to be sure that the flush has been completed.

Here, the specific access instruction may be a load instruction. According to this configuration, the instruction to access the memory may also serve to check to be sure that the flush has been completed. For example, it is possible to start another master device (DMAC or the like) after the processor checks to be sure that the load instruction has been completed.

Here, the buffer unit may include: a data buffer which temporarily holds data to be stored from the processor into the memory, on a first-in first-out basis; an address buffer which holds an address corresponding to the data to be stored; and a comparison unit which compares a load address outputted from the processor with an address held by the address buffer. Moreover, the wait generating unit may generate the wait signal when a comparison result from the comparison unit shows that the load address matches the address held by the address buffer.

According to this configuration, the wait signal is generated only for the data having the same address as the subsequent load instruction.

Here, the address buffer may hold addresses respectively corresponding to the start data through the end data, the start data through the end data being held by the buffer unit when the trigger signal is received, and that the comparison unit compares, with the load address outputted from the processor, each of the addresses which respectively correspond to the start data through the end data held by the address buffer.

According to this configuration, coherency is fully insured within the portion of the data ranging from the start data through the end data, the data being held by the buffer unit when the trigger signal is received.

Here, the address buffer may hold addresses respectively corresponding to the start data through the end data, the start data through the end data being held by the buffer unit when the trigger signal is received, and that the comparison unit compares, with the load address outputted from the processor, each of the addresses which respectively correspond to the respective data that is not written into the memory among the data to be partially flushed, and not compare, with the load address outputted from the processor, each of the addresses which respectively correspond to the respective data that has been written into the memory among the data to be partially flushed.

According to this configuration, among the data to be partially flushed, the coherency of the data which has not been written into the memory is insured. Loading of the written data is not kept waiting, thereby preventing the performance of the processor from degrading beyond necessity.

Here, the comparison unit may further compare a store address outputted from the processor with the address held by the address buffer. Moreover, when a comparison result from said comparison unit shows that the store address matches one of the addresses held by the address buffer, and the partial flush is completed, the wait generating unit may further have writing of data, from a data memory into the memory, wait, the data corresponding to the matching address, and that, when a subsequent comparison result from the comparison unit shows that the load address outputted from the processor matches one of the addresses held by the address buffer, the wait generating unit may clear the address buffer.

According to this configuration, between a load instruction to check to be sure that the writing of data has been completed from the data buffer into the memory (referred to as a second instruction) and a store instruction which has issued a trigger signal (referred to as a first instruction), it is possible to place an instruction to store in the same address as the data to be partially flushed (referred to as a third instruction). This is because the writing of data by the third instruction is kept for waiting until the partial flush is completed. This allows the third instruction to be placed between the first instruction and the second instruction, whereby an efficient program can be written.

Here, the comparison unit further may compare a store address outputted from the processor with the address held by the address buffer. In addition, when a comparison result from the comparison unit shows that the store address matches one of the addresses held by the address buffer, and the partial flush is completed, the wait generating unit may further have writing of data, from the data memory into the memory, wait, the data corresponding to the matching address, and the wait generating unit may clear the address buffer when the specific access instruction is completed.

According to this configuration, the third instruction is placed between the first instruction and the second instruction, whereby the efficient program is achieved. Furthermore, the second instruction may be a load instruction which takes an address not held in the address buffer as a load address, thereby bringing a high degree of flexibility in the program.

Here, the bus controller may include: a second buffer unit having the same configuration as the buffer unit, which is referred to as the first buffer; a designation unit which designates the first buffer unit and the second buffer unit as current; and a switching unit which switches the current designation of the designation unit, in accordance with the trigger signal. Moreover, the writing unit and the wait generating unit may have, as an object, one of the buffer units which is not designated as current, and that one of the buffer units which is designated as current which holds data to be stored from the processor.

According to this configuration, the bus controller, even with a plurality of buffer units, may perform the partial flush by switching between the buffer units in response to the trigger signal. Furthermore, the capacity corresponding to at least one buffer unit may be available for the data to be stored in a buffer after the trigger signal is generated.

### Effects of the Invention

The present invention hides latency which occurs when a buffer is flushed (writing data contained therein into another medium) or read, thereby improving the performance of the processor.

Moreover, in order to insure coherency, while data in the buffer is collectively flushed, the processor can execute a store instruction, and a minimum required amount of data can be flushed. Therefore, a quick check becomes possible to be sure that data has been written into a slave device.

### Brief Description of Drawings

FIG. 1 is a block diagram showing a configuration of a processor, devices and a bus controller according to a first embodiment.
FIG. 2 shows a status of a buffer in which a first instruction has been executed.
FIG. 3 shows a status of the buffer in which data is partially being flushed.
FIG. 4 shows another status of the buffer in which data is partially being flushed.
FIG. 5 shows a status of the buffer in which a partial flush has completed.
FIG. 6 shows Program Example 2.
FIG. 7 is a block diagram showing a configuration of a processor, devices and a bus controller according to a second embodiment.
FIG. 8 is a block diagram showing a detailed configuration of a FIFO and an address comparing unit.
FIG. 9 shows Program Example 3.
FIG. 10 is a block diagram showing a configuration of a processor, devices and, a bus controller according to a third embodiment.
FIG. 11 is a block diagram showing a detailed configuration of a FIFO and an address comparing unit.
FIG. 12 shows Program Example 4.
FIG. 13 is a block diagram showing a configuration of a processor, devices and a bus controller according to a fourth embodiment.
FIG. 14 illustrates a switching between buffer units 410a and 410b.
FIG. 15 is a block diagram showing a conventional configuration of a processor, devices and a bus controller.

### Numerical References

- 1: Processor
- 2: DMAC
- 3: Memory
- 4: Device
- 5: Device
- 100: Bus controller
- 101: Crossbar switch
- 102: Wait circuit
- 110: Buffer unit
- 111: FIFO
- 112: Flush pointer
- 113: Memory control unit
- 202: Wait circuit
- 210: Buffer unit
- 211: FIFO
- 112: Flush pointer
- 213: Memory control unit
- 214: Address comparing unit
- 21d-24d: Data latch
- 21a-24a: Address latch
- 25-28: Comparator
- 29: Determination unit
- 30: OR circuit
- 31: D flip-flop
- 32: D flip-flop
- 302: Wait circuit
- 310: Buffer unit
- 314: Address comparing unit
- 410a: Buffer unit
- 410b: Buffer unit
- 411: Current pointer
- 412: Selector

### Best Mode for Carrying Out the Invention

### <First Embodiment>

A bus controller according to a first embodiment, instead of flushing all the data in a buffer, partially flushes data to be flushed (data held until a point when a trigger signal is received). For this reason, the time ranging from the trigger signal through the flush completion can be shortened.

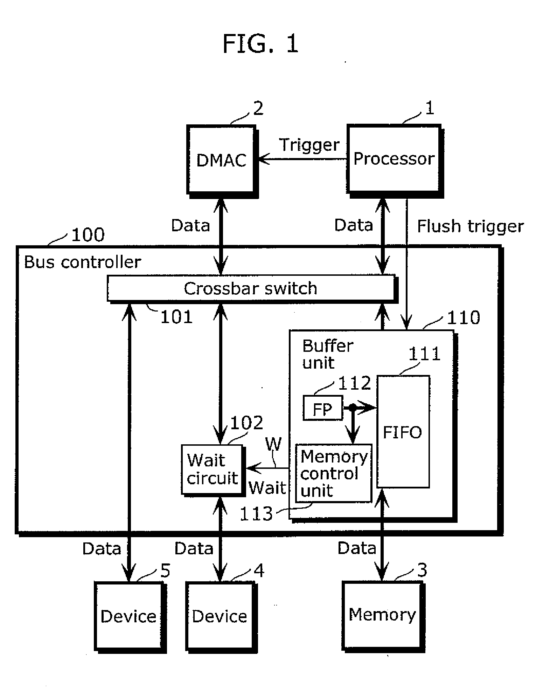

FIG. 1 is a block diagram showing a configuration of a processor, devices and a bus controller according to the first embodiment of the present invention. In this figure, a processor 1 and a Direct Memory Access Controller (DMAC) 2 that are master devices access, through a bus, a memory 3 and devices 4 and 5 that are slave devices. A bus controller 100 includes a crossbar switch 101, a wait circuit 102, and a buffer unit 110. The buffer unit 110 includes a FIFO 111, a flush pointer 112, and a memory control unit 113.

The processor 1 outputs, to the buffer unit 110, a flush trigger signal which directs a partial flush when a first instruction is executed. Here, the term "partial flush" refers to writing, from the FIFO 111 into the memory 3, a portion of the data held by the FIFO 111, the portion ranging from start data through end data to which the flush trigger is outputted. In addition, the first instruction may be an instruction only for an operation to generate a flush trigger, a store instruction having a partial flush (a store instruction having a flush trigger), or the like.

Buses of the master devices and slave devices are connected to the crossbar switch 101. The buffer unit 110 is provided between the processor 1 and the memory 3. The bus controller 100 controls data transfer. However, in the DMA transfer by the DMAC 2, the memory 3 is directly accessed not via the FIFO 111.

FIFO 111 temporarily holds data to be stored from the processor 1 into the memory 3 on a first-in first out basis. For example, FIFO 111 has a four-layered structure comprising four buffers in which a buffer 4 is provided on the output side while a buffer 1 is on the input side.

A flush pointer (FP) 112 is a register for holding a pointer which indicates the end data held by the FIFO 111 at a time when a trigger signal is received. The flush pointer 112, which is set by the flush trigger outputted from the processor 1, shifts its position together with the data, until set data is written out. As the set data has been written out, the flush pointer 112 takes a position which indicates no buffer (referred to as "NULL" for convenience). For example, in the case where the FIFO 111 has the four-layered structure in which the buffer 4 is provided on the output while the buffer 1 is on the input side, it is possible for the flush pointer 112 to take on values from 4 to 1. The taken value, decremented as data is written into the memory 3, becomes 0 (NULL) after flush completion.

Ordinarily (when the flush pointer 112 indicates NULL), the memory control unit 113 writes data from the FIFO 111 into the memory 3 by taking advantage of a idle cycle on the bus (that is, cycle stealing). The memory control unit 113 also receives the flush trigger signal outputted from the processor 1, sets the flush pointer 112, and writes the portion of the data held by the FIFO 111 into the memory 3, the portion ranging from the start data through the position indicated by the flush pointer 112, so that data is partially flushed from the FIFO 111 into the memory 3. At this time, the memory control unit 113 enables a wait direction signal W to direct the wait circuit 102 to generate a wait until the flush pointer 112 becomes NULL, that is, until the partial flush is completed.

In the case where the wait direction signal W outputted from the memory control unit 113 is enabled, the wait circuit 102 generates a wait signal for a specific access instruction to be executed by the processor 1. The specific access instruction refers to an instruction for the processor 1 to check to be sure that the partial flush has been completed (hereinafter, referred to as a second instruction), and, in this embodiment, to a read access instruction given to the device 4. The device 4 may be an I/O or a memory different from the memory 3. A special-purpose I/O may also be employed.

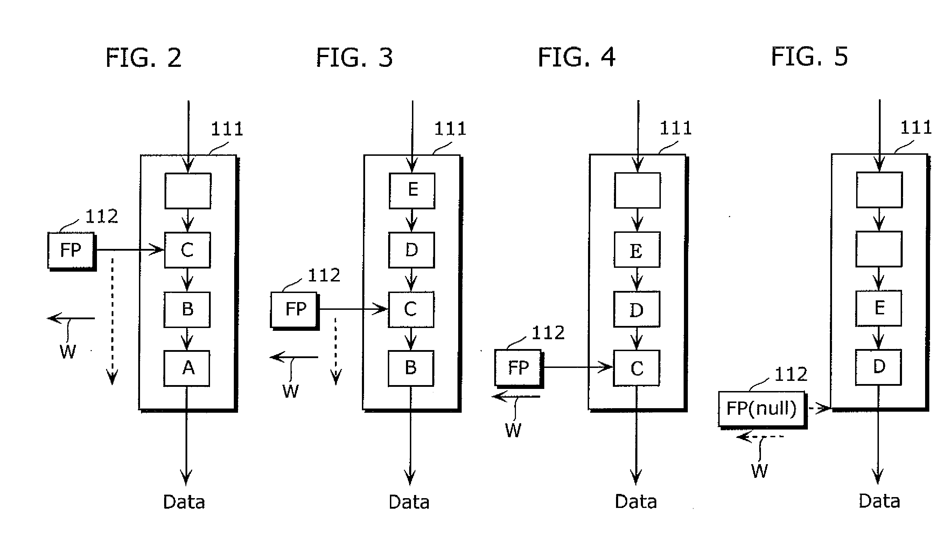

FIG. 2 shows a status of the FIFO 111 in which the first instruction has been executed. As the processor 1 executes the first instruction, the flush trigger is enabled. In this figure, since the FIFO 111 has already held data to be stored A, B, and C, the memory control unit 113 sets the flush pointer 112 to indicate the data to be stored C which is end data, starts a partial flush, and then enables the wait direction signal W.

Next, as the memory control unit 113 writes the data to be stored A into the memory 3, the flush pointer 112 shifts its position together with the data to be stored C as shown in FIG. 3. FIG. 3 shows a status in which the processor 1 executes further two store instructions and the FIFO 111 stores data to be stored D and E. In this status, when the second instruction is executed so that the processor 1 reads the device 4, the wait circuit 102 keeps completion of reading waiting.

Moreover, as the memory control unit 113 writes the data piece B into the memory 3, the flush pointer 112 shifts its position together with the data to be stored C as shown in FIG. 4. Even in the status shown in FIG. 4, the wait direction signal W is still enabled.

Next, as the memory control unit 113 writes the data to be stored C into the memory 3, the flush pointer 112 becomes NULL as shown in FIG. 5, thereby disabling the wait direction signal W. This cancels the wait which has prevented the processor 1 from reading the device 4. Note that the wait signal for keeping the completion of reading waiting is independent of write addresses of the data stored in the FIFO 111.

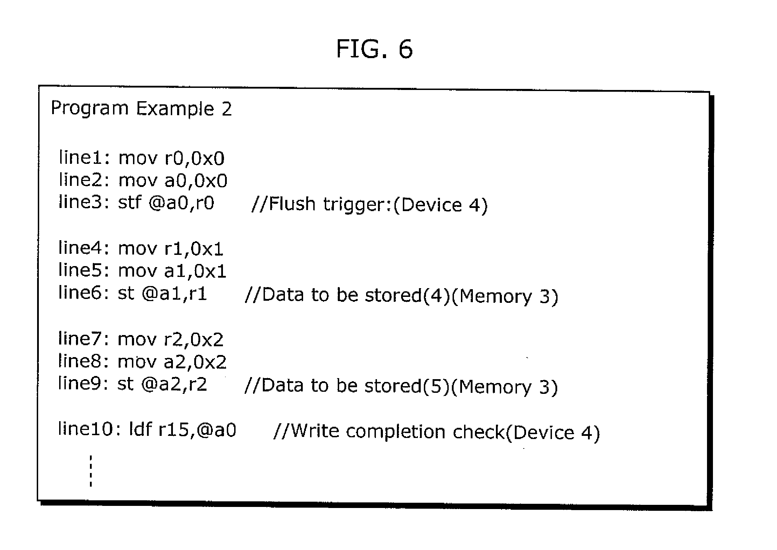

FIG. 6 shows Program Example 2. In this figure, r0, r1, r2, and r15 represent data registers. a0, a1, and a2 represent address registers. The instruction "mov" is an instruction for transferring data to a register. The instruction "st" is an instruction for transferring data from the data register to an address indicated by the address register. The instruction "Id" is an instruction for transferring memory data of an address indicated by the address register to a register.

Furthermore, the instruction "stf" is an instruction for storing data in the device 4 as a first instruction, as well as for generating a flush trigger. The stf instruction sets the flush pointer 112 to data which is lastly stored in the FIFO 111 (end data). The instruction "Idf" is an instruction for loading data from the device 4 as a second instruction, and for keeping the completion of reading waiting when the wait direction signal W is asserted. The completion of the ldf instruction ensures that the write instruction executed before the stf instruction is completed.

Program Example 2 is based on the assumption that a data piece (3) has been stored in the FIFO 111 by the program immediately before line 1. Hereinafter, a description is given for an operational example of the program divided into Case 1 and Case 2.

### <Case 1>

The stf instruction in line 3 is executed so that the flush pointer is set to data to be stored (3) which is lastly stored in the FIFO 111.

The st instruction in line 6 is executed so that data to be stored (4) is stored in a buffer. Data to be stored (5) is stored in a buffer.

When the Idf instruction in line 10 is executed, the data to be stored (3) has already been stored in the buffer 1. Therefore, a wait signal is asserted so that loading does not get completed. After the data to be stored (3) is written out from a buffer 0, the loading is completed. It is possible to execute store instructions (line 6 and line 9) between a load instruction to check to be sure that writing has been completed, and an instruction as a flush trigger. The data to be stored (4) and (5) which are stored by the store instructions are not targeted by a partial flush, thereby preventing the performance of the processor from degrading.

### <Case 2>

Furthermore, when the Idf instruction in line 10 is executed, in the case where all the stored data has been written back, a load instruction is not kept waiting. It is possible that the data to be stored (4) and (5) have been written back.

Moreover, a modified example of the first embodiment is described.
(1) Several stf instructions may be executed to access the same slave. In this case, the data to be stored which is stored by the stf instruction may be configured for being non-targeted or targeted for flushing.
(2) The first embodiment relates to the case in which a first instruction (instruction to generate a flush trigger) is a store instruction, but not limited to a store operation.
(3) The first embodiment relates to the case in which a flush trigger is asserted when the stf instruction is executed. However, the flush trigger may be asserted when the store instruction (st) to a specific address is executed. For example, a flush trigger may be asserted when a specific address within the device 4 is accessed. In this case, the flush trigger is asserted when the specific address is accessed with a device for decoding the specific address. The same is true of the Idf instruction. Wait control may be performed when the specific address is accessed.
(4) The first embodiment relates to the case in which the ldf instruction is used for accessing a slave device different from the slave device into which the data stored in a buffer is written, but the same slave device may be accessed. The instruction is not limited to a specific slave, and it is possible to set to a slave having a shorter latency.
(5) The first embodiment relates to the case in which a load instruction is used as a second instruction, but not limited to a load operation. There may be provided a device which keeps an operation waiting by placing the processor in an interlock condition while a wait signal is being asserted.

### <Second Embodiment>

In a second embodiment, a stf instruction is executed to the memory 3 into which data is to be stored. In addition, when an ld instruction to the memory 3 is executed, execution of the instruction is kept waiting during a partial flush, thereby insuring coherency.

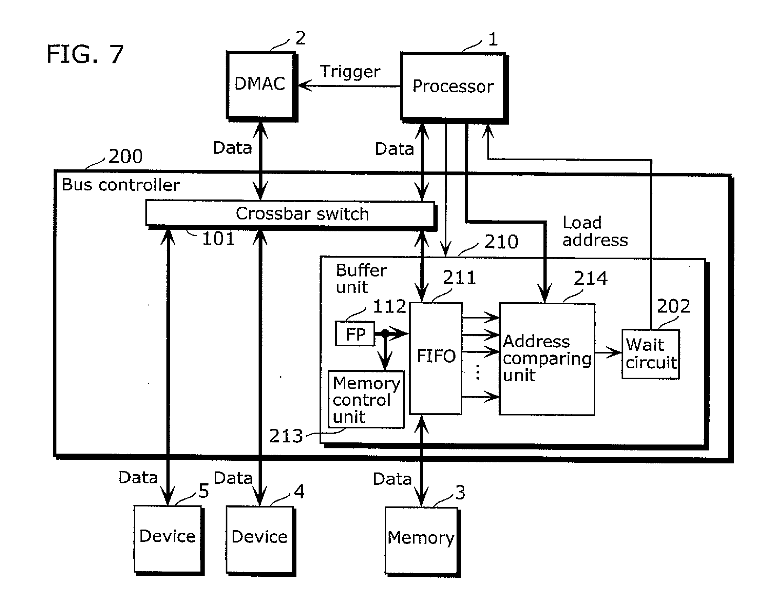

FIG. 7 is a block diagram showing a configuration of a processor, devices, and a bus controller according to the second embodiment. The configuration shown in this figure differs from the configuration shown in FIG. 1 according to the first embodiment in that a bus controller 200 is provided instead of the bus controller 100 and that the wait circuit 102 is removed. Components which have the same numerical references have the same functions as in FIG. 1, and a description is mainly given for the difference below.

The bus controller 200 differs from the bus controller 100 in that a buffer unit 210 is provided instead of the buffer unit 110.

The buffer unit 210 includes a flush pointer 112, a FIFO 211, an address comparing unit 214, and a wait circuit 202.

The FIFO 211, in addition to holding data to be stored similarly to the FIFO 111, holds an address tag. The FIFO 211 holds, as address tags, addresses respectively corresponding to start data through end data held by the FIFO 211 when a flush trigger is received. The FIFO 211 then continuously holds the addresses until the end data is written out into the memory 3. In other words, the address tags are continuously held after the flush trigger until the completion of a partial flush. For example, although the writing destination address corresponding to the data to be stored is held within the buffer unit similarly to the conventional configuration, the writing destination addresses held at a time when the flush trigger is asserted are copied into the FIFO 211 as the address tags.

The address comparing unit 214 compares the address tags corresponding to the data to be stored contained in the portion ranging from the start data through the end data held by the FIFO 211 with the load address currently outputted from the processor which is executing a load instruction.

The wait circuit 202, unlike the wait circuit 102, generates a wait signal to the processor 1 when the comparison result by the address comparing unit 214 determines that the load address matches one of the address tags.

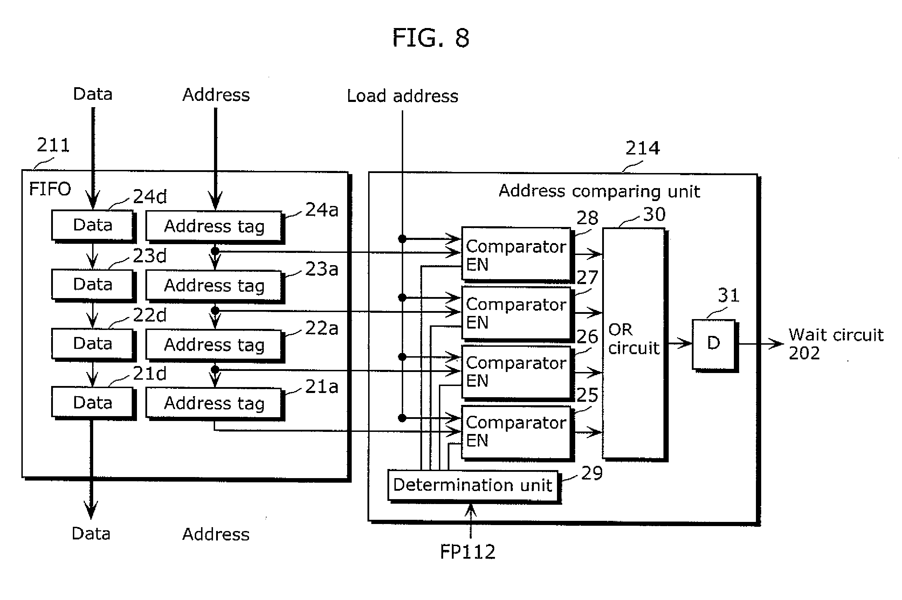

FIG. 8 is a block diagram showing a detailed configuration of the FIFO 211 and the address comparing unit 214. The FIFO 211 includes data latches 21d to 24d and address latches 21a to 24a.

The data latches 21d to 24d make a data buffer circuit for holding the data to be stored from the processor 1 into the memory 3 on a first-in first-out basis.

The address latches 21a to 24a make a latch circuit for holding the above-mentioned address tags.

The address comparing unit 214 includes comparators 25 to 28, a determination unit 29, an OR circuit 30, and a D flip-flop 31.

The comparator 25 compares the address tag in the address latch 21a with the load address outputted from the processor which is executing a load instruction. The comparators 26 to 28 are the same as the comparator 25, except that they make a comparison with each of the address tags in the address latches 22a to 24a. Note that the comparators 25 to 28 make a comparison only when the enable signal from the determination unit 29 is asserted.

The determination unit 29 enables, among the comparators 25 to 28, the comparator corresponding to the address latch which corresponds to the data to be stored indicated by the flush pointer 112 through the start data, the data to be stored indicated by the flush pointer 112 through the start data being held when a flush trigger is received. The comparator enabled by the determination unit 29 maintains its status until a partial flush is completed. For example, in the case where the flush pointer 112 indicates the data to be stored in the data latch 23d when a flush trigger is received, the determination unit 29 keeps the comparators 25 to 27 enabled until a partial flush is completed.

The OR circuit 30 implements the logical OR operation based on the comparison result by the comparators 25 to 28. Specifically, a match signal is outputted when a match with one comparator enabled by the determination unit 29 occurs, among the comparators 25 to 28.

The D flip-flop 31 holds the match signal from the OR circuit 30 in a load cycle, and then outputs the signal to the wait circuit 202. Receiving the match signal from the D flip-flop 31, the wait circuit 202 outputs a wait signal to the processor 1, in response to the execution of a load instruction.

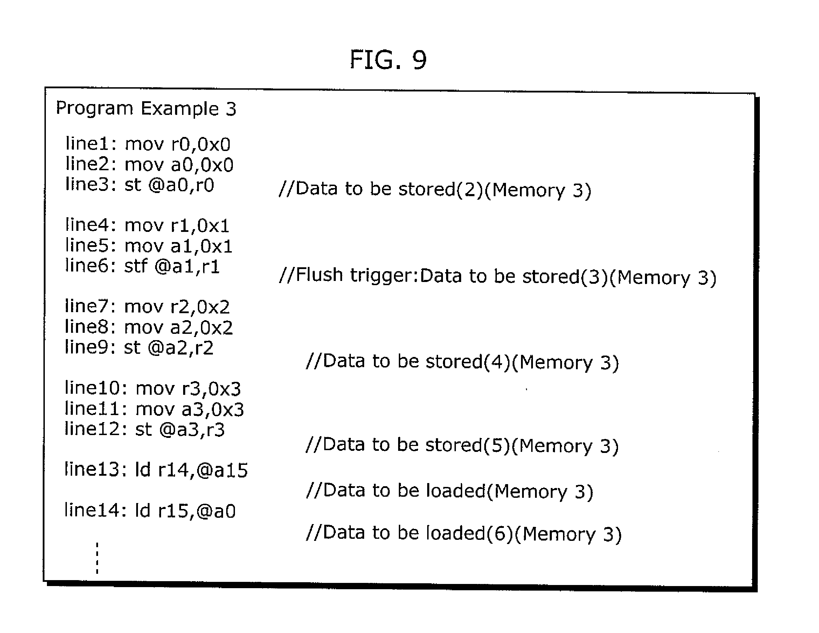

FIG. 9 shows Program Example 3. Hereinafter, a description is given for its operational example divided into Case 1 and Case 2.

### <Case 1>

The stf instruction in line 6 is executed so that the flush pointer is set to data to be stored (3) which is lastly stored in a buffer. At the same time, addresses of data to be stored (1), (2), and (3) are held as address tags.

The st instruction in line 9 is executed so that data to be stored (4) is stored in a buffer. The st instruction in line 12 is executed so that data to be stored (5) is stored in a buffer. When the Id instruction in line 13 is executed, the address tags do not match the source address of the ld instruction, thereby causing the ld instruction to be executed.

When the ld instruction in line 14 is executed, the address tag corresponding to the data to be stored (2) matches the source address of the ld instruction. At the same time, a wait signal is asserted so that loading does not get completed. After the data to be stored (3) is written out from a buffer 0, its address tag is cleared. As the address is cleared, the wait signal is released so that the loading is completed. It is thus possible to execute a store instruction between a load instruction to check to be sure that writing has been completed (the second instruction), and an instruction as a flush trigger (the first instruction). Furthermore, as is clear from the fact that the ld instruction in line 13 is executed while the ld instruction in line 14 is kept waiting, according to this configuration, a wait signal is generated only in the case where the load address of the subsequent load instruction matches the store address of the data to be stored that is to be partially flushed.

### <Case 2>

When the ld instruction in line 14 is executed, in the case where all the data to be stored has been written back, a load instruction is not kept waiting. At this time, it is possible that the data to be stored (4) and (5) have been written back.

As has been described above, according to the second embodiment, the data which has been stored in a buffer at the point of time and its access address are recognized by the address tag, with a stf instruction as a trigger. When the address matches the access address of an ld instruction, execution of the Id instruction is kept waiting, thereby insuring coherency.

Moreover, a modified example of the second embodiment is described. The determination unit 29 may enable only the comparator corresponding to the address latch which corresponds to the data to be stored indicated by the flush pointer 112 through the start data. At this time, out of some data to be stored that is to be flushed partially, the address corresponding to the data to be stored which has been written into the memory is not to be compared.

According to this configuration, among the data to be partially flushed, only coherency of the data which has not been written into the memory is insured. Therefore, an unnecessary interlock condition caused by keeping a store operation waiting is not get generated although data has already been stored, thereby preventing the performance of the processor from degrading beyond necessity.

Furthermore, the second embodiment relates to the case in which an Id instruction is used in line 14, but an ldf instruction may be used instead. According to this configuration, it is possible to determine whether or not all the data to be partially flushed has been written back.

### <Third Embodiment>

In a third embodiment, the bus controller is configured in such a way that, between a load instruction to check to be sure that a partial flush has been completed (the second instruction) and an instruction as a flush trigger (the first instruction), it is possible to execute a store instruction (referred to as the third instruction) to store data in the same address as the store address group corresponding to the data to be partially flushed. For this reason, writing by the third instruction is kept waiting until the writing of the data to be partially flushed which is to be checked with issuance of a flush trigger is completed. This allows the third instruction to be placed between the first instruction and the second instruction, whereby an efficient program can be written.

Therefore, the third embodiment differs from the second embodiment in that address tags, without being cleared in spite of the completion of a partial flush, are continuously held until the execution of an ldf instruction has been completed subsequently, and then cleared by the completion of the Idf instruction execution. Another difference is that a store address is also compared.

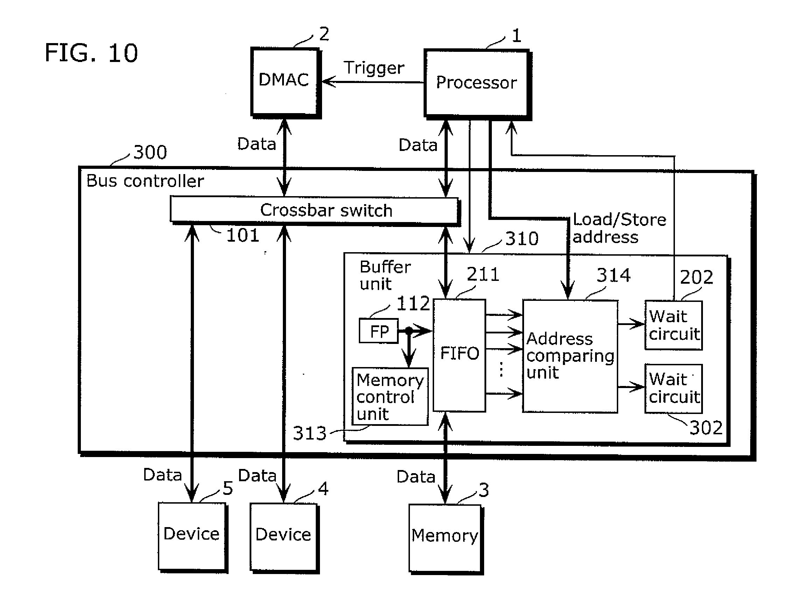

FIG. 10 is a block diagram showing a configuration of a processor, devices, and, a bus controller according to the third embodiment. The configuration shown in this figure differs from the configuration shown in FIG. 7 according to the second embodiment, in that a bus controller 300 is provided instead of the bus controller 200. The bus controller 300 differs from the bus controller 200 in that a buffer unit 310 is provided instead of the buffer unit 210. The buffer unit 310 differs from the buffer unit 210 in that an address comparing unit 314 is provided instead of the address comparing unit 214, that a wait circuit 302 is newly added thereto, and that a memory control unit 313 is provided instead of the memory control unit 213. Components which have the same numerical references have the same functions as in FIG. 7, and their description is omitted. Hereinafter, a description is mainly given for the difference.

The address comparing unit 314, in addition to comparing the load address similarly to the address comparing unit 214, compares the store address outputted from the processor 1 which is executing a store instruction, with the address tags corresponding to the pieces of data contained in the portion ranging from the head through the end of the data held by the FIFO 211.

When the comparison result by the address comparing unit 314 determines that the store address matches with one of the address tags, the wait circuit 302 generates a wait signal to the memory control unit 313. This is intended to prevent the third instruction from storing data after the first instruction is completed as well as in the case where the second instruction has not been completed yet. In other words, it is not until after the first instruction completion as well as the second instruction completion, that the third instruction is executed to store data.

The memory control unit 313 differs from the memory control unit 213, in that an address tag, without being cleared in spite of the completion of a partial flush, is cleared when the execution of the subsequent second instruction (Idf instruction) is completed, and that data is kept waiting for being stored from the buffer unit 310 into the memory 3 in response to the wait signal from the wait circuit 302.

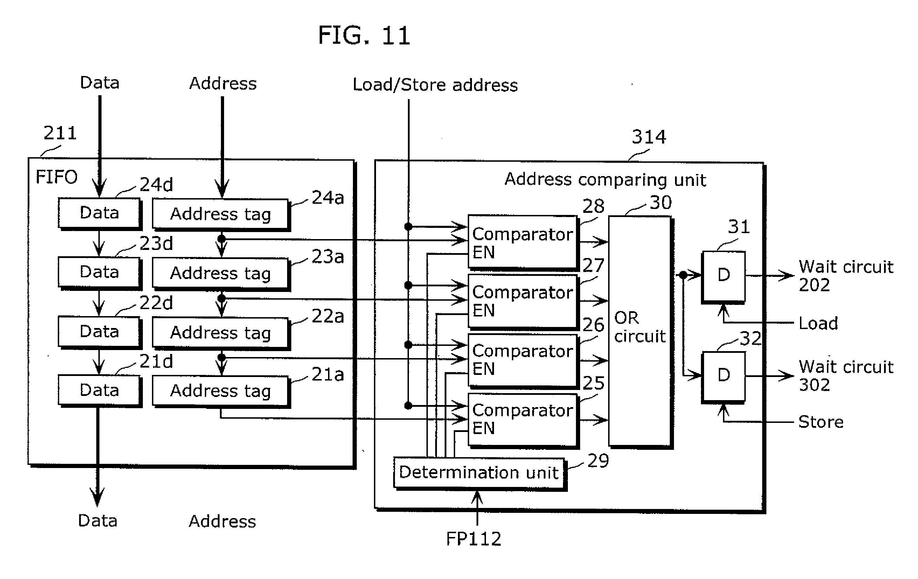

FIG. 11 is a block diagram showing a detailed configuration of a FIFO 211 and an address comparing unit 314. The configuration shown in this figure differs from the configuration shown in FIG. 8 according to the second embodiment, in that an address comparing unit 314 is provided instead of the address comparing unit 214. The address comparing unit 314 differs from the address comparing unit 214 in that a load address and a store address are inputted instead of inputting only a load address therein, and that a D flip-flop 32 is added thereto. Components which have the same numerical references have the same functions as in FIG. 8, and their description is omitted. Hereinafter, a description is mainly given for the difference.

A load address and a store address are inputted into the address comparing unit 314. The comparators 25 to 28 make a comparison with an address tag both when a load address is inputted and when a store address is inputted. This comparison continues even after a partial flush is completed until the second instruction completion. When the second instruction is completed, the address tag is cleared. Consequently, a mismatch occurs in the comparison result, thereby finishing the comparison.

A D flip-flop 31 holds the match signal generated when the processor 1 executes a load instruction. The D flip-flop 32 holds the match signal generated when the processor 1 executes a store instruction, and then outputs the signal to the memory control unit 313.

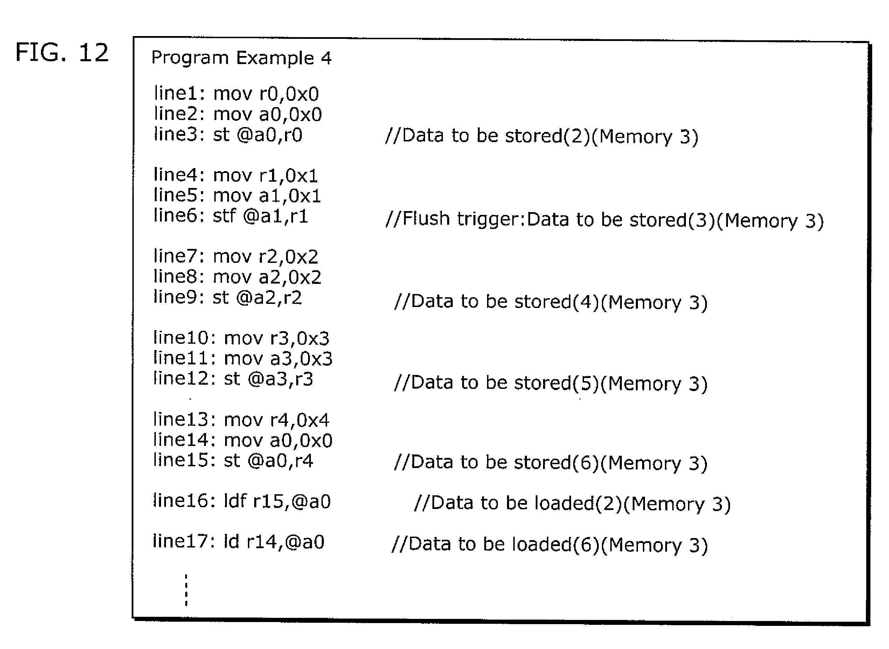

FIG. 12 shows Program Example 4. Hereinafter, a description is given for its operational example divided into Case 1 and Case 2.

### <Case 1>

The stf instruction in line 6 is executed so that the flush pointer is set to data to be stored (3) which is lastly stored in a buffer. At the same time, addresses of data to be stored (1), (2), and (3) are held as address tags.

The st instruction in line 9 is executed so that a data piece (4) is stored in a buffer.
The st instruction in line 12 is executed so that data to be stored (5) is stored in a buffer. It is assumed that data to be stored (6) has not been stored in a buffer yet. At this time, the flush pointer does not indicate NULL.

When the ldf instruction in line 16 is executed, the address tags match the source address of the ldf instruction, thereby asserting a wait signal so that loading does not get completed. As the data to be stored (3) is written out from the buffer unit into the memory 3, an address of the address tag is cleared, the wait signal is released, thereby completing the loading. It is thus possible to execute a store instruction between a load instruction to check to be sure that writing has been completed, and an instruction as a flush trigger. Note that the execution of the ldf instruction is completed at the same time as the address tag is cleared.

### <Case 2>

Case 2 is based on the assumption that data to be stored (1) and (2) have been written back by the time when the ldf instruction in line 16 is executed. Data to be stored (3), when ready to be written back, matches the address stored as the address tag. At this time, the flush pointer indicates buffer 0. The bus controller writes back the data to be stored (3), and then has the flush pointer indicate NULL.

Next, data to be stored (4) and (5) are written back. Data to be stored (6), when ready to be written back, matches the address stored as the address tag. At this time, the flush pointer indicates NULL. The bus controller keeps the data to be stored (6) waiting for being written back.

Furthermore, the ldf instruction in line 16 causes the address tag to be cleared. A mismatch with the address stored as the address tag then occurs, thereby causing the data to be stored (6), which is kept waiting, to be written back. Specifically, the Idf instruction in line 16 causes the data to be stored (2) 0x0 to be loaded, and the Id instruction in line 17 causes the data to be stored (6) 0x4 to be loaded.

As has been described above, according to the <Case 1>, the data which has been stored in a buffer at the point of time and its access address group are recognized, with a stf instruction as a trigger. When the access address group matches the access address of an ldf instruction, the flush pointer does not indicate NULL. The ldf instruction is kept waiting for its completion until the data is written back. Taking an example in which an Id instruction is added between line 15 and line 16, when the access address group matches the access address of the ld instruction, it is possible to keep the ld instruction waiting for its completion until the data is written back.

Moreover, in <Case 2>, the data of the st instruction issued after a first instruction is stored in a buffer. The data is written back when the access address group does not match the access address of the st instruction. When there is a match as well as the flush pointer does not indicate NULL, the data is written back. When there is a match as well as the flush pointer indicates NULL, the data is not written back until an ldf instruction is completed.

For this reason, an instruction to store data in the same address may be placed, as an instruction to cause data to be written back, between a load instruction to check to be sure that writing has been completed and an instruction as a flush trigger, whereby an efficient program can be written.

Note that, according to the third embodiment, an ldf instruction is used in line 16, and its load address is the same address as the address held in the address buffer.

As a modified example of the third embodiment, an Id instruction may be used in line 16, and its load address may be the same address as the address held in the address buffer. In this case, the match between the load address outputted from the processor and one of the addresses held by the address buffer causes the address buffer to be cleared.

Also, an ldf instruction may be used in line 16, and its load address may be an address different from the address held by the address buffer. In this case, the address buffer is cleared in response to the specific instruction ldf. As has been described above, an instruction other than the load instruction targeting the address held in the address buffer is available as the second instruction, thereby bringing a high degree of flexibility in the program.

### <Fourth Embodiment>

The bus controller according to a fourth embodiment, having a plurality of buffer units, uses an stf instruction as a trigger, recognizes the data which has been stored in a buffer at the point of time so as to switch between the buffer units. The bus controller keeps an ldf instruction waiting for its completion until only the data is written into a slave device. The data of the st instruction following the stf instruction is stored in the switched buffer group, and then written into a slave device before the Idf instruction is completed.

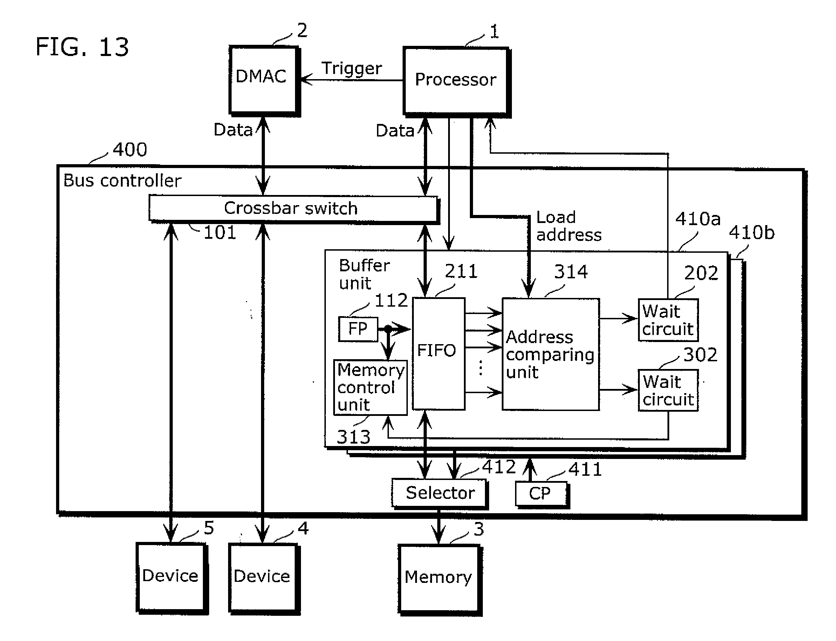

FIG. 13 is a block diagram showing a configuration of a processor, devices, and a bus controller according to the fourth embodiment. The configuration shown in this figure differs from the configuration shown in FIG. 10 according to the third embodiment, in that a bus controller 400 is provided instead of the bus controller 300. The bus controller 400 differs from the bus controller 300 in that buffer units 410a and 410b are provided instead of the buffer unit 310, and that a current pointer 411 and a selector 412 are newly added. Components which have the same numerical references have the same functions as in FIG. 10, and their description is omitted. Hereinafter, a description is mainly given for the difference.

The buffer unit 410a is referred to as buffer A, and the buffer unit 410b as buffer B for convenience.

Each of the buffer units 410a and 410b has the same configuration as the buffer unit 310. The current pointer 411 holds a pointer which indicates either of the buffer units 410a and 410b. The buffer unit indicated by the current pointer holds data to be stored from the processor 1. As a flush trigger is generated, a flush pointer is set to the buffer unit indicated by the current pointer, and subsequently the current pointer is switched.

Out of the data outputted from the buffer units 410a and 410b, the selector 412 selects the data outputted whose flush pointer does not indicate NULL. In the case where both flush pointers indicate NULL, the data outputted indicated by the current pointer 411 is selected.

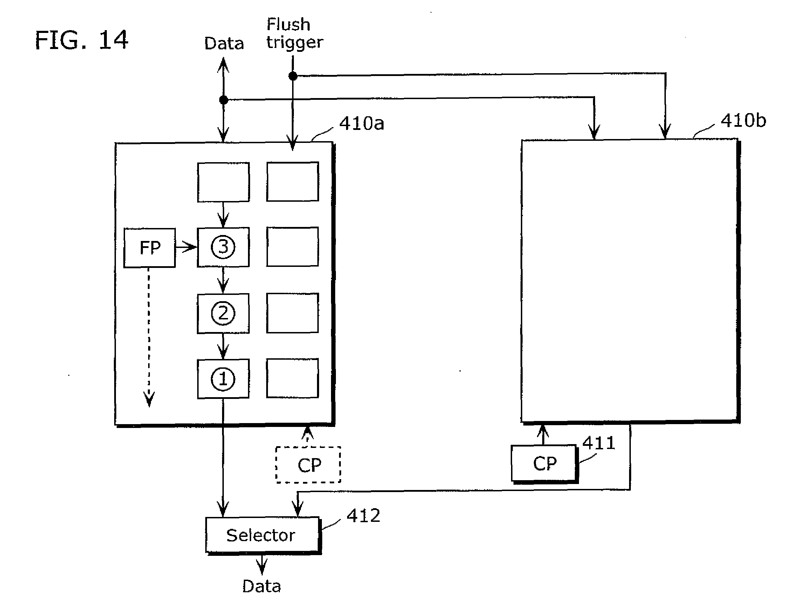

FIG. 14 illustrates the operation of and the switching between the buffer units 410a and 410b. The bus controller 400 performs the following processes: (a) selecting the buffer to which data is added; (b) switching when a flush trigger is generated; (c) selecting data to be written back; and (d) selecting when no flush trigger is generated. The processes are performed as described below.

(a) In order to select the buffer to which the data to be stored from the processor 1 is added, the bus controller 400 uses the current pointer 411 to indicate the buffer unit holding the data to be stored from the processor 1. Specifically, the data to be stored from the processor 1 is added to the buffer unit indicated by the current pointer 411.

(b) When a flush trigger is generated, the bus controller 400 sets the flush pointer to the flush pointer of the buffer unit indicated by the current pointer, and switches the current pointer.

(c) In order to select data to be written back, when the flush pointer does not indicate NULL, the bus controller 400 controls each of the memory control units 313 and the selector 412 so that the data to be stored in the buffer indicated by a previous pointer (indicates a buffer different from the buffer indicated by the current pointer) is written back until the flush pointer becomes NULL.

When the flush pointer indicates NULL, the bus controller 400 controls each of the memory control units 213 and the selector 412 so that the data to be stored in the buffer indicated by the current pointer is written back.

(d) When no flush trigger is generated, the bus controller 400 controls each of the memory control units 313 and the selector 412 so that the data to be stored in the buffer indicated by the current pointer so as to be written back from the buffer indicated by the current pointer.

Next, a description is given for an operational example with reference to the Program 2 shown in FIG. 6. The current pointer is assumed to indicate the buffer A.

The stf instruction in line 3 is executed so that the flush pointer is set to data to be stored (3) which is lastly stored in a buffer. At this time, the buffer A stores data to be stored (1), (2), and (3).

In such a situation, the current pointer switches to the buffer B. The st instruction in line 6 is executed so that data to be stored (4) is stored in the buffer B.

The st instruction in line 9 is executed so that data to be stored (5) is stored in the buffer B. When the ldf instruction in line 10 is executed, the data to be stored (3) is stored in the second stage from the head of the buffer A. At this time, a wait signal is asserted, thereby preventing loading from completing.

As the data to be stored (3) is written out from the head of the buffer A, the loading by the ldf instruction in line 10 is completed.

It is thus possible to execute store instructions (line 6 and line 9) between a load instruction to check to be sure that writing has been completed (ldf instruction in line 10) and an instruction as a flush trigger (stf instruction in line 3). The data to be stored (4) and (5) that is to be stored by this store instruction is stored in the current buffer B which has been switched by a flush trigger.

Thus, the bus controller, even for a processor having a plurality of buffer groups, switches between buffer groups using a flush trigger so that the data to be flushed can be limited to a specific range. After the flush trigger is generated, the capacity for the data to be stored in a buffer can be definitely reserved by an amount corresponding to one buffer group.

Next, another description is given for a modified example of the fourth embodiment. According to this modified example, there is provided a bus controller for a processor having a plurality of buffer groups. The bus controller uses a stf instruction as a trigger; recognizes the data and its access address which have been stored in a buffer at the time when the trigger is used as the stf instruction; switches between buffer groups, keeps an ldf instruction waiting for its completion until the data is written into a slave device. The data of the st instruction issued after an stf instruction is stored in the switched buffer group. When the address does not match the access address of the st instruction, the data is written into a slave device before the ldf instruction is completed. When there is a match as well as the flush pointer does not indicate NULL, the data is also written back. When there is a match as well as the flush pointer indicates NULL, the data is not written back until the ldf instruction is completed.

Therefore, in addition to the process described in the first half of the fourth embodiment, a description is hereinafter given for the processes address comparison and address tag clearance.

The address comparison is a process of comparing and searching for the matching address among the address tags indicated by the previous pointer. In this case, the buffer to which the flush pointer has been set is now indicated by the previous pointer due to pointer switching.

The address tag clearance is a process of clearing the address tag indicated by the previous pointer.

Hereinafter, a description is given for its operational example divided into Case 1 and Case 2 with reference to the Program Example 4 shown in FIG. 12.

### <Case 1>

The current pointer is assumed to be indicating the buffer A now.

The stf instruction in line 6 is executed so that the flush pointer is set to data to be stored (3) which is lastly stored in a buffer. At the same time, addresses of data to be stored (1), (2), and (3) are held as address tags. The stf instruction as a flush trigger causes the current pointer to switch to the buffer B.

The st instruction in line 9 is executed so that data to be stored (4) is stored in the buffer B. The st instruction in line 12 is executed so that data to be stored (5) is stored in the buffer B.

It is assumed that data to be stored (6) has not been stored in a buffer yet. At this time, the flush pointer does not indicate NULL.

When the ldf instruction in line 16 is executed, the address tags match the source address of the Idf instruction, thereby asserting a wait signal so that loading does not get completed. Furthermore, as the data to be stored (3) is written out from the head of the buffer A, its address tag is cleared, the wait signal is released, and then loading is completed. It is thus possible to execute a store instruction between a load instruction to check to be sure that writing has been completed (the second instruction) and an instruction as a flush trigger (the first instruction). Note that the execution of the ldf instruction is completed at the same time that the address tag is cleared.

### <Case 2>

It is assumed that the data to be stored (1) and (2) have been written back from the buffer A by the time when the ldf instruction in line 16 is executed. Furthermore, the data to be stored (3), when ready to be written back from the buffer A, matches the address stored in the address tag of the buffer A indicated by the previous pointer. At this time, the flush pointer indicates buffer 0. The bus controller writes back the data to be stored (3), and then has the flush pointer indicate NULL. Data is continuously written back from the buffer A indicated by the previous pointer until the flush pointer becomes NULL.

Next, data to be stored (4) and (5) are written back from the buffer B indicated by the current pointer. Data to be stored (6), when ready to be written back, matches the address stored in the address tag of the buffer A indicated by the previous pointer. At this time, the flush pointer indicates NULL. The bus controller keeps writing back of the data to be stored (6) waiting.

Furthermore, the ldf instruction in line 16 causes the address tag of the buffer A indicated by the previous pointer to be cleared. A mismatch with the address stored in the address tag then occurs, thereby causing the waiting data to be stored (6) to be written back.

Thus, the bus controller, even for a processor having a plurality of buffer groups, can make address comparisons using address tags, switching between buffer groups using a flush trigger. After the flush trigger is generated, the capacity for the data to be stored in a buffer can be definitely reserved by an amount corresponding to one buffer group.

Note that, in each of the above embodiments, the bus controller may be configured to selectively perform a partial flush or an entire flush. In this case, the processor 1 may output two types of flush triggers so that the buffer unit selectively performs a flush partially or entirely according to the types of flush triggers.

### Industrial Applicability

The bus controller according to the present invention, which has a buffer, is useful in that latency is hidden thereby improving the performance of the processor.

## Claims

1. A bus controller that controls a bus between a processor and a memory, said bus controller comprising:
a buffer unit operable to temporarily hold data to be stored from the processor into the memory, on a first-in first-out basis;
a reception unit operable to receive a trigger signal that causes said buffer unit to be partially flushed;
a pointer holding unit operable to hold a pointer which indicates end data held by said buffer unit at a time when the trigger signal is received;
a writing unit operable to write, in accordance with the trigger signal, a portion of the data held by said buffer unit into the memory so as to partially flush said buffer unit, the portion ranging from start data through data which is indicated by the pointer among the data held by said buffer unit; and
a wait generating unit operable to generate a wait signal for a specific access instruction to be executed by the processor, until said writing unit completes the partial flush.

2. The bus controller according to Claim 1,
wherein said reception unit is operable to receive the trigger signal, the trigger signal being outputted from the processor when an instruction other than an instruction to access the memory is executed.

3. The bus controller according to Claim 1,
wherein said reception unit is operable to receive the trigger signal, the trigger signal being outputted from the processor when the processor executes a store instruction having the partial flush.

4. The bus controller according to Claim 1,
wherein the specific access instruction is an instruction to access a device which is different from the memory.

5. The bus controller according to Claim 1,
wherein the specific access instruction is a load instruction.

6. The bus controller according to Claim 1,
wherein said buffer unit includes:
a data buffer operable to temporarily hold data to be stored from the processor into the memory, on a first-in first-out basis;
an address buffer operable to hold an address corresponding to the data to be stored; and
a comparison unit operable to compare a load address outputted from the processor with an address held by said address buffer, and
said wait generating unit is operable to generate the wait signal when a comparison result from said comparison unit shows that the load address matches the address held by said address buffer.

7. The bus controller according to Claim 6,
wherein said address buffer is operable to hold addresses respectively corresponding to the start data through the end data, the start data through the end data being held by said buffer unit when the trigger signal is received, and
said comparison unit is operable to compare, with the load address outputted from the processor, each of the addresses which respectively correspond to the start data through the end data held by said address buffer.

8. The bus controller according to Claim 6,
wherein said address buffer is operable to hold addresses respectively corresponding to the start data through the end data, the start data through the end data being held by said buffer unit when the trigger signal is received, and
said comparison unit is operable to compare, with the load address outputted from the processor, each of the addresses which respectively correspond to the respective data that is not written into the memory among the data to be partially flushed, and operable not to compare, with the load address outputted from the processor, each of the addresses which respectively correspond to the respective data that has been written into the memory among the data to be partially flushed.

9. The bus controller according to Claim 7,
wherein said comparison unit is further operable to compare a store address outputted from the processor with the address held by said address buffer,
when a comparison result from said comparison unit shows that the store address matches one of the addresses held by said address buffer, and the partial flush is completed, said wait generating unit is further operable to have writing of data, from a data memory into the memory, wait, the data corresponding to the matching address, and
when a subsequent comparison result from said comparison unit shows that the load address outputted from the processor matches one of the addresses held by said address buffer, said wait generating unit is operable to clear said address buffer.

10. The bus controller according to Claim 7,
wherein said comparison unit is further operable to compare a store address outputted from the processor with the address held by said address buffer,
when a comparison result from said comparison unit shows that the store address matches one of the addresses held by said address buffer, and the partial flush is completed, said wait generating unit is further operable to have writing of data, from the data memory into the memory, wait, the data corresponding to the matching address, and
said wait generating unit is operable to clear said address buffer when the specific access instruction is completed.

11. The bus controller according to one of Claims 1, 7, 8, 9, and 10, further comprising:
a second buffer unit having the same configuration as said buffer unit which is referred to as a first buffer;
a designation unit operable to designate one of said first buffer unit and said second buffer unit as current; and
a switching unit operable to switch the current designation of said designation unit, in accordance with the trigger signal, and
wherein said writing unit and said wait generating unit have, as an object, one of said buffer units which is not designated as current, and
one of said buffer units which is designated as current is operable to hold data to be stored from the processor.
